# DEMANDE DE BREVET EUROPEEN

(11) **EP 1 535 770 A1**
(43) Date de publication de la demande: **01.06.2005**
(21) Numéro de dépôt: 04027155.3
(22) Date de dépôt: 16.11.2004
(51) Int. Cl.: B60H 1/00

(54) **Dispositif de chauffage-ventilation et/ou climatisation d'un habitacle de véhicule automobile avec réglage de température par zones**

(30) Priorité: 28.11.2003 FR 0314035
(71) Demandeur: VALEO CLIMATISATION, 78321 La Verrière (FR)
(72) Inventeur: Vincent, Philippe, 28230 Epernon (FR); Pierres, Philippe, 78310 Maurepas (FR)

(57) **Abrégé**

Le dispositif de l'invention comprend un boîtier (10) comportant une chambre amont (12) qui alimente en air frais un conduit auxiliaire (40) alimentant au moins un premier conduit (52, 54) d'alimentation d'une zone arrière (ZAr) de l'habitacle, une première chambre de mixage (20) alimentant en air traité des seconds conduits (30, 32, 34) d'alimentation d'une zone avant (ZAv) de l'habitacle et une chambre de chauffage (16) alimentant en air réchauffé la chambre de mixage (20) et le(s) premier(s) conduit(s). Le dispositif comprend en outre une deuxième chambre de mixage (50) et un volet de distribution unique (56) ayant un premier organe de contrôle (60) agencé pour distribuer sélectivement une partie de l'air réchauffé provenant de la chambre de chauffage (16), soit vers la première chambre de mixage (20), soit vers la deuxième chambre de mixage (50), et un second organe de contrôle (62) agencé pour contrôler la distribution de l'air mixé provenant de la deuxième chambre de mixage à travers le(s) premier(s) conduit(s) (52, 54). Application aux véhicules automobiles.

The device of this invention comprises a casing (10) having an upstream chamber (12) which feeds with cool air an auxiliary duct (40) feeding at least one first duct (52, 54) which feeds a rear area (ZAr) of the cabin, a first mixing chamber (20) feeding with treated air second ducts (30, 32, 34) feeding a front area (ZAv) of the cabin and a heating chamber (16) feeding with reheated air the first mixing chamber (20) and the first duct(s). The device further comprises a second mixing chamber (50) and a single distribution shutter (56) having a first control member (60) arranged to selectively distribute a portion of the reheated air coming from the heating chamber (16), either to the first mixing chamber (20), or to the second mixing chamber (50), and a second control (62) arranged to control distribution of the mixed air from the second mixing chamber through the first duct(s) (52, 54). Application to motor vehicles.

## Description

L'invention se rapporte au domaine du chauffage-ventilation et/ou climatisation des habitacles des véhicules automobiles.

Elle concerne plus particulièrement un dispositif de chauffage-ventilation et/ou climatisation d'un habitacle de véhicule automobile, comprenant un boîtier comportant une chambre amont qui alimente en air frais un conduit auxiliaire alimentant au moins un premier conduit d'alimentation d'une zone arrière de l'habitacle, sous le contrôle de premiers moyens de distribution d'air, une première chambre de mixage alimentant en air traité des seconds conduits d'alimentation d'une zone avant de l'habitacle, et une chambre de chauffage alimentant en air réchauffé la chambre de mixage et le(s) premier(s) conduit(s).

On connaît déjà, notamment d'après FR 2 795 683 et FR 2 795 684, des dispositifs de ce type. Ils permettent de réguler les paramètres aérothermiques d'un habitacle de véhicule automobile, dans une zone avant et dans une zone arrière de celui-ci.

Ces dispositifs connus fonctionnent de façon satisfaisante mais ils ont pour inconvénient que les moyens de distribution d'air, qui contrôlent la zone arrière de l'habitacle, nécessitent plusieurs volets avec une cinématique complexe, ce qui augmente la complexité du dispositif.

En outre, ces moyens de distribution sont volumineux et augmentent en conséquence l'encombrement du dispositif, alors que la place dévolue aux équipements des véhicules automobiles est de plus en plus limitée.

L'invention a notamment pour but de surmonter les inconvénients précités.

Elle propose en conséquence un dispositif du type défini en introduction, lequel comprend au moins une deuxième chambre de mixage située à l'intersection du conduit auxiliaire, de la chambre de chauffage et du premier conduit, et un volet de distribution unique ayant un premier organe de contrôle pour distribuer sélectivement une partie de l'air réchauffé provenant de la chambre de chauffage, soit vers la première chambre de mixage, soit vers la deuxième chambre de mixage, pour y produire un flux d'air mixé, et un second organe de contrôle agencé pour contrôler la distribution de l'air mixé provenant de la deuxième chambre de mixage à travers le(s) premier(s) conduit(s).

Le dispositif de l'invention comprend ainsi un seul volet de distribution qui a essentiellement pour fonction, d'une part de distribuer sélectivement une partie de l'air réchauffé provenant de la chambre de mixage et, d'autre part, de contrôler la distribution de l'air mixé provenant de la deuxième chambre de mixage à travers le(s) premier(s) conduit(s), c'est à dire vers la zone arrière de l'habitacle.

Il en résulte une simplification du dispositif et une réduction de l'encombrement global de ce dernier.

Dans une forme de réalisation préférée de l'invention, le volet de distribution unique comprend un axe de rotation supportant le premier organe de contrôle et le second organe de contrôle, le premier organe de contrôle est agencé pour coopérer avec une première paroi qui est située dans la chambre de chauffage délimitant un passage d'air pour ladite partie d'air réchauffé, tandis que le second organe de contrôle est agencé pour coopérer avec une seconde paroi qui contribue à délimiter la deuxième chambre de mixage, et dans laquelle débouche au moins une sortie d'air alimentant le(s) premier(s) conduit(s).

Dans une première variante de réalisation de l'invention, qui de conception simplifiée, la deuxième paroi comporte une seule sortie d'air qui alimente un seul premier conduit, tandis que le volet de distribution est déplaçable entre une première position dans laquelle le premier organe de contrôle ouvre le passage d'air, tandis que le deuxième organe de contrôle ferme la sortie d'air, et une seconde position de distribution arrière dans laquelle le premier organe de contrôle ferme le passage d'air, tandis que le deuxième organe de contrôle ouvre la sortie d'air.

Des caractéristiques complémentaires et/ou de substitution de cette première variante de réalisation sont les suivantes :
- le premier organe de contrôle comprend une aile de forme générale rectangulaire qui s'étend à partir de l'axe de rotation et qui est bordée par une arête agencée pour coopérer avec la première paroi, tandis que le deuxième organe de contrôle comprend une coque reliée à l'axe de rotation et agencée pour coopérer avec la deuxième paroi qui est de forme cylindrique ;
- la première paroi se termine par un bord d'extrémité avec lequel coopère l'arête du premier organe de contrôle lorsque le volet de distribution est dans la position de distribution arrière.

Dans une deuxième variante de réalisation de l'invention, qui est de conception plus évoluée, la deuxième paroi comporte au moins deux sorties d'air, décalées angulairement par rapport à l'axe de rotation, qui alimentent deux premiers conduits, le volet de distribution est déplaçable entre une première position de distribution dans laquelle le premier organe de contrôle ouvre le passage d'air, tandis que le deuxième organe de contrôle ferme les deux sorties d'air et deux positions de distribution arrière dans lesquelles le premier organe de contrôle ferme le passage d'air, tandis que le deuxième organe de contrôle ouvre respectivement l'une des deux sorties d'air.

Des caractéristiques complémentaires et/ou de substitution de cette deuxième variante sont les suivantes :
- les deux sorties d'air comprennent une sortie pieds arrière et une sortie aération arrière qui alimentent respectivement un conduit pieds arrière et un conduit aération arrière, le volet de distribution est déplaçable entre une première position extrême qui correspond à la première position de distribution et une deuxième position extrême qui correspond à une position aération arrière dans laquelle la sortie aération arrière est ouverte, le volet de distribution occupant au moins une position intermédiaire qui correspond à une position pieds arrière dans laquelle la sortie pieds arrière est ouverte ;
- le premier organe de contrôle comprend une aile de forme générale rectangulaire qui s'étend à partir de l'axe de rotation et qui est bordée par une arête agencée pour coopérer avec la première paroi, tandis que le deuxième organe de contrôle comprend une coque reliée à l'axe de rotation et agencée pour coopérer avec la deuxième paroi qui est de forme cylindrique, ainsi qu'une aile radiale agencée pour fermer la sortie pieds arrière lorsque le volet de distribution est dans la position aération arrière ; et
- la première paroi comporte une portion cylindrique circulaire avec laquelle coopère l'arête du premier organe de contrôle lorsque le volet de distribution se trouve dans l'une ou l'autre des positions de distribution arrière.

Dans une troisième variante de réalisation, qui correspond à une autre conception évoluée, la deuxième paroi comporte au moins deux sorties d'air décalées axialement sur une même génératrice parallèle à l'axe de rotation, qui alimentent deux premiers conduits, le volet de distribution est déplaçable entre une première position dans laquelle le premier organe de contrôle ouvré le passage d'air, tandis que le deuxième organe de contrôle ferme les deux sorties d'air, et deux positions de distribution arrière dans lesquelles le premier organe de contrôle ferme le passage d'air, tandis que le deuxième organe de contrôle ouvre respectivement l'une des deux sorties d'air.

Des caractéristiques complémentaires et/ou de substitution de cette troisième variante sont les suivantes :
- les deux sorties d'air comprennent au moins une sortie pieds arrière et au moins une sortie aération arrière qui alimentent respectivement un conduit pieds arrière et un conduit aération arrière, le volet de distribution est déplaçable entre une première position extrême qui correspond à la première position de distribution et une deuxième position extrême qui correspond à une position aération arrière dans laquelle la sortie aération arrière est ouverte, le volet de distribution occupant au moins une position intermédiaire qui correspond à une position pieds arrière dans laquelle la sortie pieds arrière est ouverte ;
- le premier organe de contrôle comprend une aile de forme générale rectangulaire qui s'étend à partir de l'axe de rotation et qui est bordée par une arête agencée pour coopérer avec la première paroi, tandis que le deuxième organe de contrôle comprend une coque reliée à l'axe de rotation et agencée pour coopérer avec la deuxième paroi qui est de forme cylindrique, la coque comportant des portions aptes à fermer ou ouvrir sélectivement la sortie aération arrière et la sortie pieds arrière, ainsi qu'au moins une aile radiale agencée pour fermer la sortie pieds arrière lorsque le volet de distribution est dans la position aération arrière;
- la première paroi comporte une portion cylindrique circulaire avec laquelle coopère l'arête du premier organe de contrôle lorsque le volet de distribution se trouve dans l'une ou l'autre des positions de distribution arrière ;
- le dispositif comprend deux sorties pieds arrière qui encadrent une sortie aération arrière ;
- le dispositif comprend au moins une sortie pieds arrière et au moins une sortie aération arrière qui sont décalées angulairement et axialement par rapport à l'axe de rotation.

Le dispositif peut comprendre une cloison centrale, totale ou partielle, qui s'étend dans la deuxième chambre de mixage pour définir respectivement des flux d'air pour une partie droite et une partie gauche de l'habitacle.

En particulier, la cloison centrale peut être totale pour diviser ainsi la deuxième chambre de mixage en deux chambres contenant chacune un volet de distribution pour la gestion en distribution et en température des flux d'air dans la partie droite et la partie gauche de l'habitacle.

Dans la description qui suit, faite seulement à titre d'exemple, on se réfère aux dessins annexés, sur lesquels :
- la figure 1 illustre schématiquement, dans une vue en coupe, un dispositif selon l'invention dans un premier mode de réalisation ;
- les figures 2 à 4 illustrent une partie du dispositif de la figure 1 dans laquelle le volet de distribution unique est représenté respectivement dans trois positions de réglage différentes, à savoir une position "dégivrage", une position "pieds" et une position "aération",
- les figures 5 à 8 illustrent respectivement quatre configurations possibles de sorties "pieds" et "aération" d'un boîtier qui loge le volet de distribution unique ;
- la figure 9 est une vue en perspective du volet de distribution unique du dispositif des figures 1 à 4 ;
- la figure 10 est un détail du dispositif de la figure 1 illustrant des moyens d'étanchéité du volet de distribution unique ;
- la figure 11 illustre schématiquement un dispositif selon un deuxième mode de réalisation de l'invention qui correspond à une conception simplifiée ;
- la figure 12 illustre en perspective un boîtier logeant un volet de distribution unique dans un troisième mode de réalisation de l'invention ;
- la figure 13 est une vue en perspective du volet de distribution logé dans le boîtier de la figure 12 ;
- les figures 14 et 15 présentent une vue schématique et une vue en perspective du boîtier et du volet des figures 12 et 13 dans une position "dégivrage" ;
- les figures 16 et 17 représentent schématiquement et en coupe le boîtier et le volet de distribution dans une position "pieds", la sortie ventilation arrière étant fermée ;
- les figures 18 et 19 sont respectivement une vue schématique et une vue en coupe dans la position "pieds" montrant la sortie pieds ouverte ;
- les figures 20 et 21 sont des vues analogues aux figures 16 et 17 dans la position "aération" et ;
- les figures 22 et 23 sont des vues analogues aux figures 18 et 19 dans la position "aération".

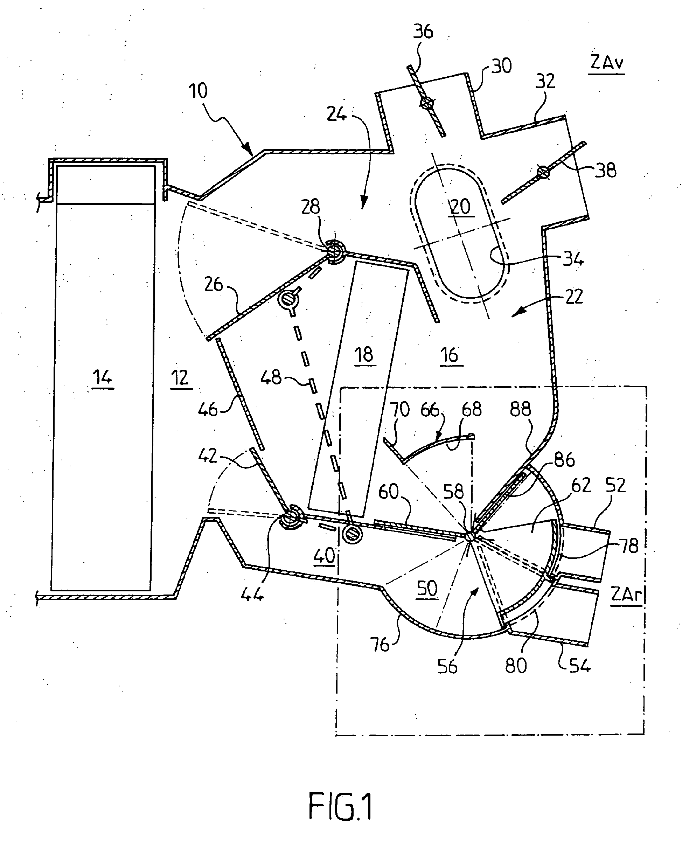

On se réfère d'abord à la figure 1 qui montre un premier mode de réalisation d'un dispositif selon l'invention faisant partie d'une installation de chauffage-ventilation et/ou climatisation d'un habitacle de véhicule automobile comportant une zone avant et une zone arrière.

Le dispositif comprend un boîtier 10 délimitant une chambre amont 12 logeant, dans l'exemple, un évaporateur 14 faisant partie d'un circuit de climatisation classique (non représenté). La chambre amont 12 est alimentée par de l'air frais (extérieur et/ou recirculé) pulsé par un groupe moto-ventilateur (non représenté).

Le boîtier 10 délimite également une chambre de chauffage 16 logeant un radiateur de chauffage 18 qui est traversé par un fluide chaud, habituellement le liquide de refroidissement du moteur du véhicule.

Le boîtier 10 délimite en outre, en partie supérieure, une première chambre de mixage 20 qui possède une entrée 22 pour de l'air réchauffé provenant de la chambre dé chauffage 16 et une entrée 24 pour de l'air frais provenant de la chambre amont 12.

Un premier volet de mixage 26, dans l'exemple du type "drapeau", est monté pivotant autour d'un axe 28. Il permet de répartir la proportion d'air froid et d'air réchauffé qui alimente la première chambre de mixage 20 pour y produire un flux d'air traité à température régulée. Le volet 26 est déplaçable entre deux positions extrêmes, à savoir une position d'ouverture représentée en trait plein, dans laquelle la chambre de mixage 20 est alimentée en air frais et une position de fermeture, représentée en traits interrompus, dans laquelle l'entrée de la chambre de mixage est fermée en sorte que l'air frais est envoyé vers le radiateur de chauffage 18. Le volet 26 peut prendre différentes positions intermédiaires pour répartir l'air frais entre l'entrée 24 de la chambre de mixage 20 et l'entrée du radiateur de chauffage 18.

Cette première chambre de mixage 20 alimente en air traité des conduits 30, 32 et 34 d'alimentation d'une zone avant ZAv de l'habitacle. Le conduit 30 alimente au moins une buse de dégivrage/désembuage du pare-brise sous le contrôle d'un volet 36, tandis que le conduit 32 alimente au moins une bouche d'aération centrale sous le contrôle d'un volet 38. Enfin, deux conduits 34 sont implantés latéralement de part et d'autre du boîtier 10 pour alimenter respectivement des buses d'aération (non représentées) débouchant aux deux extrémités de la planche de bord. Par conséquent, les conduits 30, 32 et 34 permettent d'envoyer de l'air traité dans la zone avant ZAv de l'habitacle.

Le boîtier 10 délimite en partie inférieure un conduit auxiliaire 40 apte à être alimenté en air frais par la chambre amont 12 sous le contrôle d'un deuxième volet de mixage 42, dans l'exemple du type "drapeau", monté pivotant autour d'un axe 44. Le volet 42 est déplaçable entre deux positions extrêmes, à savoir une position d'ouverture représentée en trait plein, dans laquelle le conduit auxiliaire 40 est alimenté en air frais et une position de pleine fermeture, représenté en trait interrompu, dans laquelle l'entrée du conduit auxiliaire 40 est fermée. Le volet 42 peut aussi prendre des positions intermédiaires pour régler la proportion de l'air frais qui est distribué soit vers le conduit auxiliaire 40, soit vers le radiateur de chauffage 18 et donc vers la chambre de chauffage 16.

Une cloison 46 est placée entre les volets 26 et 42. Ces deux derniers sont commandés par des organes de commande 48 représentés ici de façon schématique.

La structure générale du dispositif, telle qu'elle vient d'être décrite jusqu'à présent, est connue de façon générale, notamment par les publications FR 2 795 683 et FR 2 795 684 déjà citées.

Conformément à l'invention, le boîtier 10 délimite en outre une deuxième chambre de mixage 50, placée en partie inférieure, qui est située à l'intersection du conduit auxiliaire 40, de la chambre de chauffage 16 et de deux premiers conduits 52 et 54 qui alimentent une zone arrière ZAr de l'habitacle. Le conduit 52 est désigné conduit "pieds arrière" et le conduit 54 conduit "aération arrière".

Un volet de distribution unique 56 monté en rotation autour d'un axe 58 permet de distribuer sélectivement une partie de l'air réchauffé provenant de la chambre de chauffage 16 soit vers la première chambre de mixage 20, soit vers la deuxième chambre de mixage 50, afin d'y produire un flux d'air mixé. En outre, le volet 56 a pour fonction de contrôler la distribution de l'air mixé provenant de la deuxième chambre de mixage 50 à travers les conduits 52 et 54 précités.

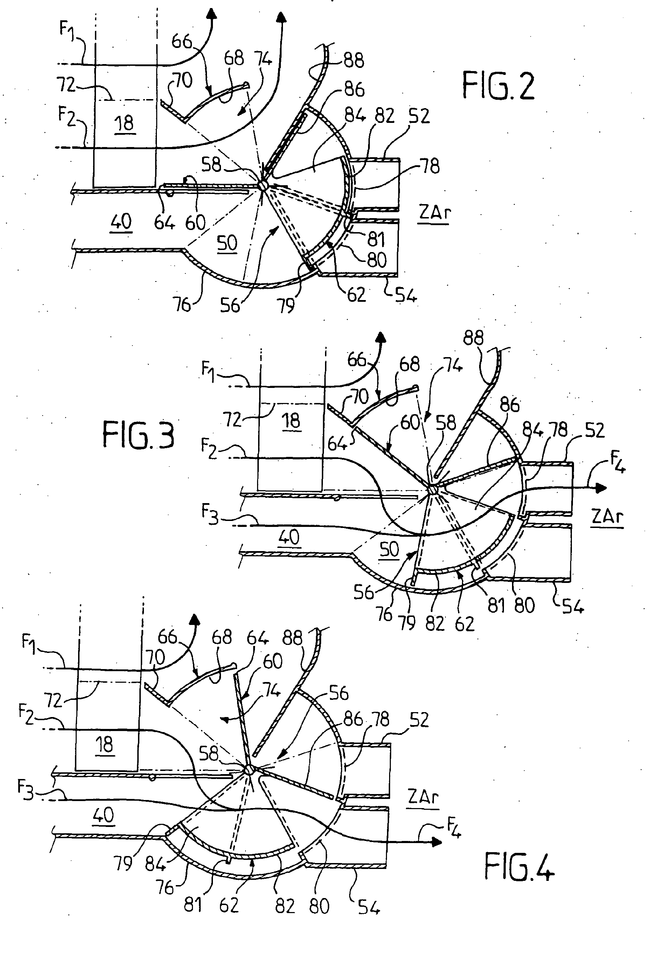

On se réfère maintenant aux figures 2 à 4 pour décrire plus particulièrement la structure du volet de distribution 56 et son fonctionnement. L'axe de rotation 58 du volet supporte un premier organe de contrôle 60 et un deuxième organe de contrôle 62. Le premier organe de contrôle 60 comprend une aile de forme générale rectangulaire qui s'étend à partir de l'axe de rotation 58 et qui est bordée par une arête 64 parallèle à l'axe 58. Cette arête 64 est agencée pour coopérer avec une première paroi 66 comportant une portion cylindrique circulaire 68 qui s'étend sur un intervalle angulaire limité (dans l'exemple d'environ 45°). Cette portion 68 est reliée à une cloison 70 qui débouche sur une face de sortie du radiateur de chauffage 18 et qui permet de délimiter une ligne fictive 72 séparant un flux d'air chaud haut (flèche F1) et un flux d'air chaud bas (flèche F2). La première paroi 66 est située dans la chambre de chauffage 16 pour contribuer à y délimiter un passage d'air 74 pour une partie d'air réchauffé (flèche F2).

Le deuxième organe de contrôle 62 est agencé pour coopérer avec une deuxième paroi 76, ici de forme cylindrique circulaire, qui contribue à délimiter la deuxième chambre de mixage 50. Dans cette deuxième paroi 76 débouchent deux sorties d'air, à savoir une sortie "pieds arrière" 78 et une sortie "aération arrière" 80. Les sorties 78 et 80 sont décalées angulairement (par rapport à l'axe de rotation 58) et elles alimentent respectivement les conduits 52 et 54.

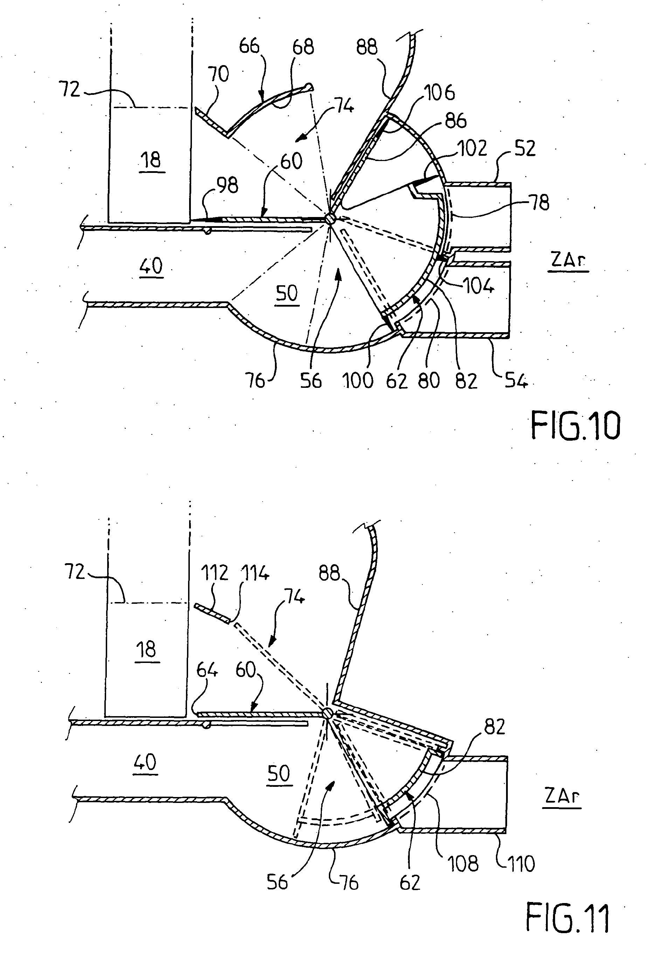

Le deuxième organe de contrôle 62 comprend une coque 82, ici de forme cylindrique, reliée à l'axe de rotation 58 par des flasques 84 comme on le voit le mieux sur la vue en perspec tive de la figure 9. Par le terme "coque" on entend désigner ici une paroi, en principe non radiale par rapport à l'axe de rotation 58, qui peut présenter notamment une forme plane, cylindrique ou gauche, et dont la périphérie peut fermer ou ouvrir au moins une ouverture de passage d'air. Le deuxième organe de contrôle 62 comprend en outre une aile radiale 86 qui est située entre l'aile 60 formant le premier organe de contrôle et la coque 82. Une cloison radiale 88, prévue dans la chambre de chauffage 16, s'étend jusqu'à proximité de l'axe 58 et sert de butée à l'aile radiale 86 dans la position dégivrage de la figure 2.

On décrira maintenant le fonctionnement du volet de distribution 56 pour trois modes correspondant aux figures 2 à 4. Dans le mode "dégivrage" de la figure 2, le volet de distribution 56 se trouve dans une première position extrême dans laquelle l'organe de contrôle 60 ouvre le passage d'air 74 et ferme l'accès à la chambre de mixage 50. Il en résulte que les deux flux d'air chaud F1 et F2 sont déviés vers le haut et conduits vers la première chambre de mixage 20 qui alimente la zone avant de l'habitacle. Ceci permet de bénéficier de toute la puissance du radiateur de chauffage dans les bouches de dégivrage alimentées par le conduit 30 (figure 1). Dans cette position, le conduit auxiliaire 40 est fermé par le volet de mixage 42 et en outre le deuxième organe de contrôle 62 ferme les sorties 78 et 80. En effet, la coque 82 s'étend sur un intervalle angulaire suffisant (ici sensiblement inférieur à 90°) pour obturer à la fois les sorties 78 et 80 qui sont décalées angulairement. Dans cette position, l'aile radiale 86 vient en butée contré la cloison 88.

Dans le mode de distribution "pieds" de la figure 3, le volet de distribution a pivoté d'une fraction angulaire (ici de l'ordre de 30°) autour de l'axe 58, par rapport à la position de la figure 2, dans le sens horaire sur les dessins. L'arête 62 de l'organe de contrôle 60 vient coopérer avec une extrémité de la portion cylindrique 68 fermant ainsi le passage d'air 74. Cette position correspond à une position intermédiaire dans laquelle la coque 82 de l'organe de contrôle 62 a dégagé la sortie pieds arrière 78, tout en maintenant fermée la sortie aération arrière 80. Par conséquent, une partie du flux d'air chaud (flèche F2) peut gagner la chambre de mixage 50 et s'y mélanger avec de l'air frais (flèche F3), sous le contrôle du volet de mixage 42. Le flux d'air mixé à température réglable, ainsi obtenue, s'échappe par la sortie pieds arrière 78 et gagne ainsi le conduit pieds arrière 52, comme montré par la flèche F4.

Dans le mode de distribution "aération" de la figure 4, le volet a encore pivoté, dans le sens horaire, par rapport à la position précédente et il se trouve dans une autre position extrême. Dans cette position extrême, la coque 82 de l'organe de contrôle 62 a dégagé la sortie aération 80, tandis que la sortie pieds arrière 78 est fermée par l'aile radiale 86. Il en résulte que le passage d'air 74 est toujours fermé comme dans la position précédente et que le flux d'air chaud F2 se mélange au flux d'air frais F3 pour produire un flux d'air mixé F4 qui passe par la sortie aération 80 pour alimenter le conduit aération arrière 54.

Comme on le voit aux figures 2 à 4, des portées 79 et 81 sont prévues entre le volet 56 et la paroi 76 du boîtier pour garantir l'étanchéité dans au moins un mode de distribution. Dans l'exemple les deux portées 79 et 81 s'étendent parallèlement à l'axe de rotation 58 et s'étendent radialement au delà de la coque 82. Les périphéries des portées sont décalées l'une par rapport à l'autre pour permettre à la fois l'étanchéité et le mouvement de rotation du volet. Les portées 79 et 81 permettent d'assurer une fermeture complètement étanche des sorties 78 et 80 dans le mode de dégivrage de la figure 2. Les portées peuvent être remplacées par d'autres moyens d'étanchéité, en particulier par des lèvres souples.

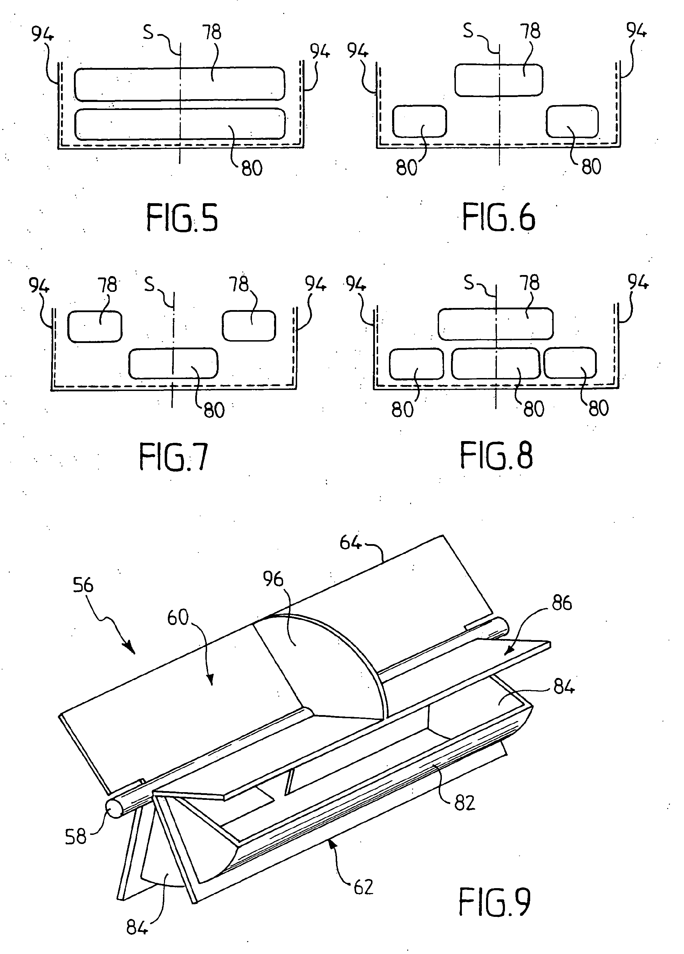

Dans le mode de réalisation des figures 1 à 4, les sorties 78 et 80 sont décalées angulairement par rapport à l'axe de rotation 58 sur la paroi 76. Différentes configurations pour ces deux sorties sont montrées aux figures 5 à 8.

Dans le cas de la figure 5, les sorties 78 et 80 s'étendent pratiquement sur toute la largeur du boîtier 10, telle qu'elle est définie entre les parois latérales 94 du boîtier.

On a représenté également sur la figure 5 le plan de symétrie S du boîtier qui s'étend verticalement et sensiblement à mi-distance des parois latérales 94.

Dans le cas de la figure 6, le dispositif comprend une seule sortie pieds 78 située au centre et deux sorties aération arrière 80 symétriques par rapport au plan de symétrie S et situées respectivement près des parois d'extrémité 94.

Dans le cas de la figure 7, le dispositif comprend deux sorties pieds arrière 78 disposées symétriquement par rapport au plan de symétrie et une seule sortie aération arrière 80 située au centre. Dans le cas de la figure 8, le dispositif comprend une sortie pieds arrière 78 et trois sorties aération arrière 80, une sortie 80 au centre et deux sorties 80 situées latéralement.

Il en résulte que le dispositif comprend alors au moins une sortie pieds arrière 78 et au moins une sortie aération arrière 80 qui sont décalées angulairement et/ou axialement par rapport à l'axe de rotation.

La figure 9 montre en perspective la structure du volet 56. On distingue l'axe 58, le premier organe de contrôle 60 réalisé sous la forme d'une aile de forme générale rectangulaire et le deuxième organe de contrôle 62 qui comprend une coque 82 montée sur deux flasques 84 et en outre l'aile radiale 86. Comme montré sur la figure 9, il est possible de prévoir une cloison centrale 96 dans le cas d'un dispositif à gestion séparée, en distribution et en température, pour la partie droite et la partie gauche de l'habitacle. Dans l'exemple, cette cloison centrale fait partie du volet 56.

Ainsi, l'étendue de la cloison centrale peut être partielle comme représenté sur la figure 9 afin de gérer les flux d'air traité dans la partie droite et la partie gauche de l'habitacle. Il est également possible que la cloison centrale 96 s'étende sur la totalité de la section transversale de la paroi 76 et permettre ainsi de réaliser une séparation totale entre les flux d'air traité dans la partie droite et dans la partie gauche.

Dans cette réalisation, il peut être avantageux de disposer de deux volets 56 du type décrit précédemment, respectivement de part et d'autre de la cloison centrale 96. En ce cas la cloison centrale 96 est de préférence montée fixe dans la chambre de mixage 50 pour délimiter deux sous-chambres affectées respectivement aux parties droite et gauche de l'habitacle. En variante, la cloison centrale peut être réalisée solidaire de l'un ou l'autre des deux volets.

On se réfère maintenant à la figure 10 qui montre à nouveau le volet de distribution 56 dans la position dégivrage. On remarque que ce volet est muni de plusieurs joints d'étanchéité, à savoir une lèvre 98 qui constitue l'arête de l'organe de contrôle 60 et trois lèvres 100, 102 et 104 équipant la coque 82. Les lèvres 100 et 102 sont situées aux extrémités de la coque, tandis que la lèvre 104 est située entre les lèvres 100 et 102. Enfin, l'aile radiale 86 est pourvue d'une lèvre d'étanchéité 106. Les lèvres 100, 102 et 104 ont notamment pour fonction d'assurer une étanchéité sur portées en mode dégivrage, de manière analogue aux portées 79 et 81 des figures 2 à 4. Elle peuvent en outre lécher les parois intérieures du boîtier et garantir ainsi une étanchéité parfaite dans tous les modes de distribution. La technique de réalisation privilégiée est un surmoulage d'une matière souple et élastique.

On se réfère maintenant à la figure 11 qui représente une version simplifiée du dispositif. Dans cet exemple, la deuxième paroi 76 comporte une seule sortie d'air 108 qui alimente un seul conduit 110, lequel alimente à son tour la zone arrière ZAr. Le volet de distribution 56 est déplaçable entre une position dégivrage (représentée en trait plein sur la figure 11) dans laquelle l'organe de contrôle 60 ouvre le passage d'air 74, tandis que l'organe de contrôle 62 ferme la sortie d'air unique. Le volet 56 peut aussi prendre une position de distribution arrière (représentée en trait interrompu) dans laquelle l'organe de contrôle 60 ferme le passage d'air 74, tandis que le deuxième organe de contrôle 62 ouvre la sortie d'air 108. Comme dans la forme de réalisation précédente, l'organe de contrôle 60 comprend une aile de forme générale rectangulaire bordée par une arête 64. Cependant, la première paroi se limite ici à une cloison 112 qui se termine par un bord d'extrémité 114 avec lequel coopère l'arête 64 de l'organe de contrôle 60 lorsque le volet de distribution est dans la position de distribution arrière.

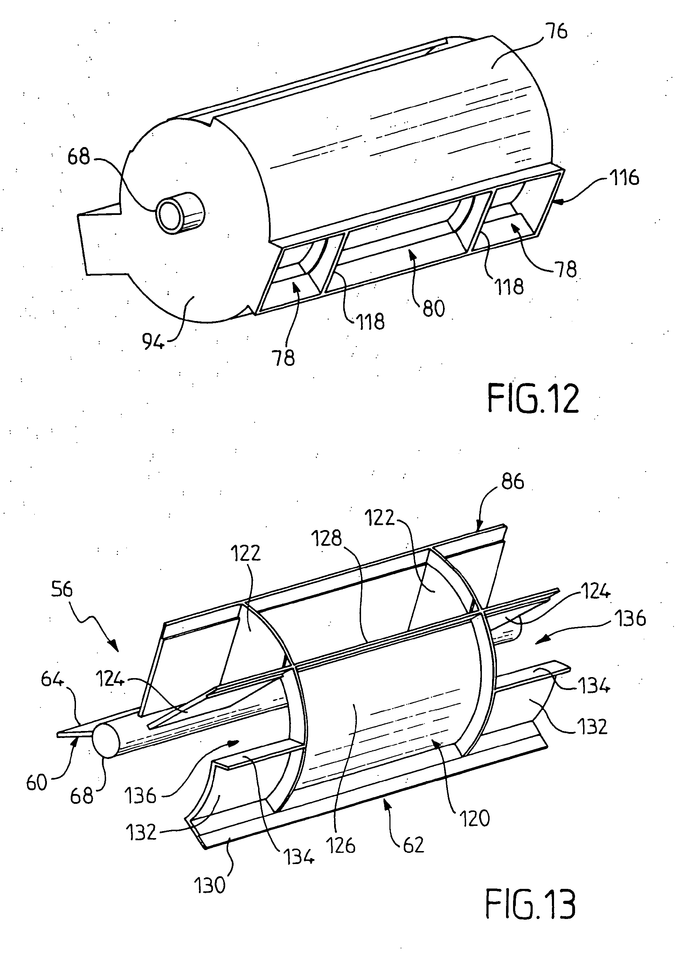

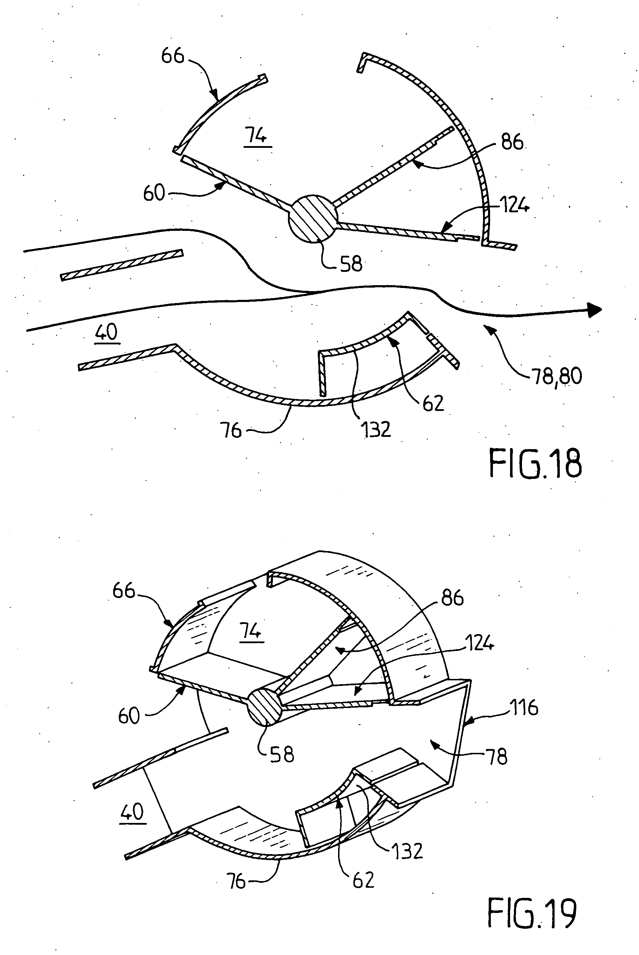

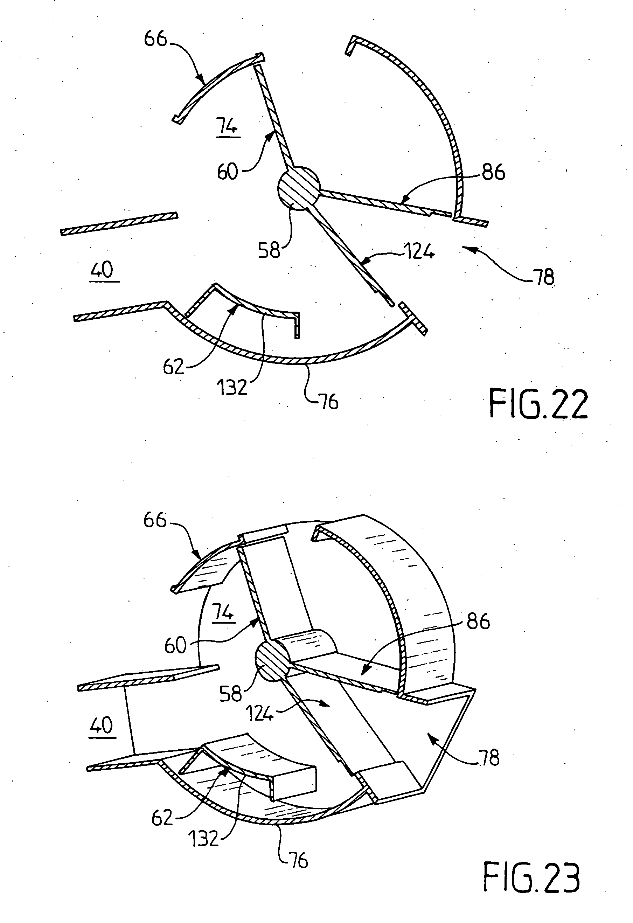

Dans la forme de réalisation des figures 12 à 24, la deuxième paroi 76 du boîtier (figure 12) comporte trois sorties d'air décalées axialement selon une génératrice parallèle à l'axe de rotation 58, à savoir une sortie aération arrière 80 encadrée par deux sorties pieds arrière 78, ces trois sorties étant délimitées par un cadre rectangulaire 116 et deux cloisons transversales 118. Les sorties d'air 78 alimentent respectivement deux conduits 52, tandis que la sortie d'air 80 alimente un conduit 54.

Le volet de distribution 56 (figure 13) comprend un premier organe de contrôle 60 réalisé sous la forme d'une aile rectangulaire terminée par une arête 64 agencée pour coopérer avec une paroi 66 comportant une portion cylindrique circulaire 68 analogue à celle du premier mode de réalisation.

Le premier organe de contrôle 60 du volet comprend une coque cylindrique 120 agencée pour coopérer avec la paroi 76, de forme cylindrique, mentionnée précédemment. Le deuxième organe de contrôle 62 comprend aussi une aile radiale 86 analogue à celle du premier mode de réalisation. La coque 120 est rattachée à l'aile 86 par deux entretoises 122 en forme d'arc de cercle qui se trouvent dans l'alignement des deux cloisons 118.

Ces deux entretoises 122 servent de support à deux cloisons latérales 124 qui s'étendent dans la direction radiale et qui se rattachent aux entretoises 122. La coque 120 comprend une portion centrale 126 qui s'étend entre les deux entretoises 122 depuis un bord 128 parallèle à l'axe de rotation et compris entre les cloisons 124 jusqu'à un bord 130 qui s'étend sur toute la longueur axiale du volet. La portion centrale 126 est encadrée par deux portions latérales 132. Chacune de ces portions s'étend entre un bord 134 situé à distance de l'extrémité de la cloison 124 et le bord 130. De la sorte, deux ouvertures latérales 136 sont aménagées de part et d'autre des entretoises 122.

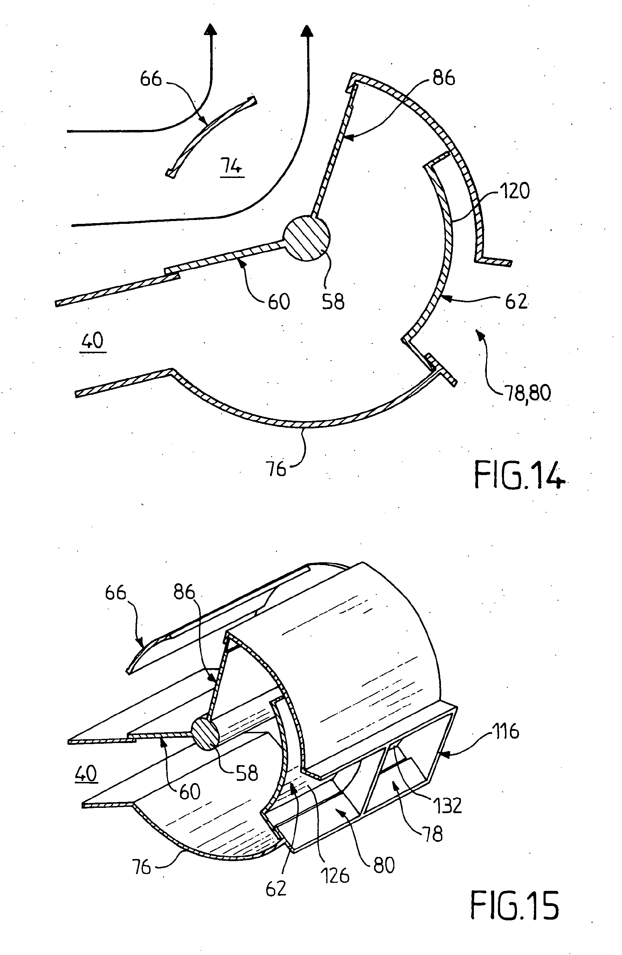

On décrira maintenant le fonctionnement du dispositif selon ce troisième mode de réalisation en référence aux figures 14 à 23.

Dans la position "dégivrage" des figures 14 et 15, le premier organe de contrôle 60 ouvre le passage d'air 74, tandis que le deuxième organe de contrôle 62 ferme les deux sorties d'air 78 et 80. Plus particulièrement, la portion centrale 126 de la coque 120 ferme la sortie centrale 80, tandis que les deux portions latérales 132 ferment respectivement les deux sorties latérales 78.

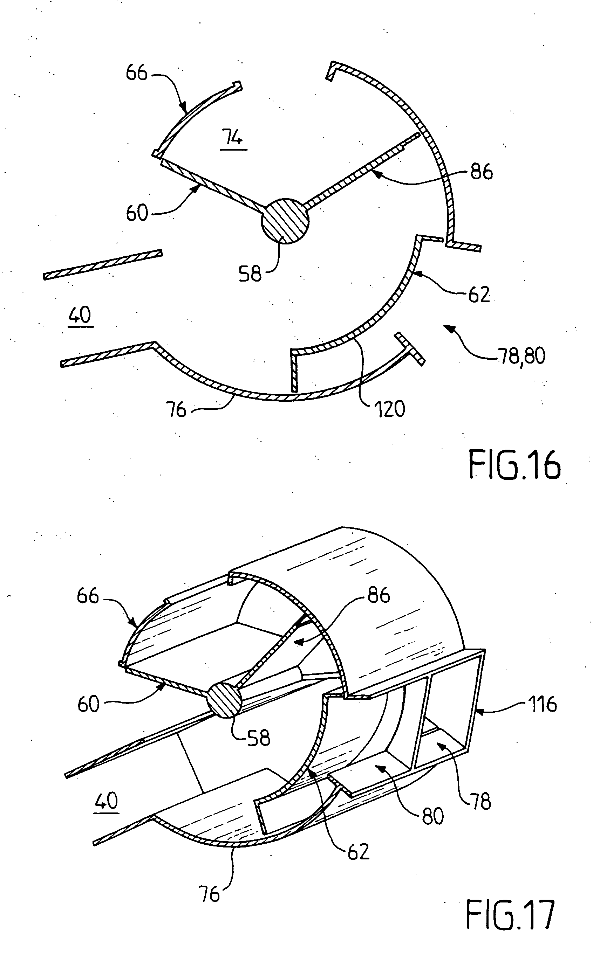

Dans la position "pieds" des figures 16 à 19, le premier organe de contrôle 60 ferme le passage d'air 74, tandis que le deuxième organe de contrôle 62 ouvre l'une des deux sorties d'air, à savoir les deux sorties pieds 78 situées latéralement. La portion centrale 126 de la coque 120 ferme la sortie aération arrière 80, tandis que les deux portions latérales 132 sont décalées et les ouvertures 136 coïncident avec les sorties 78 pour les libérer.

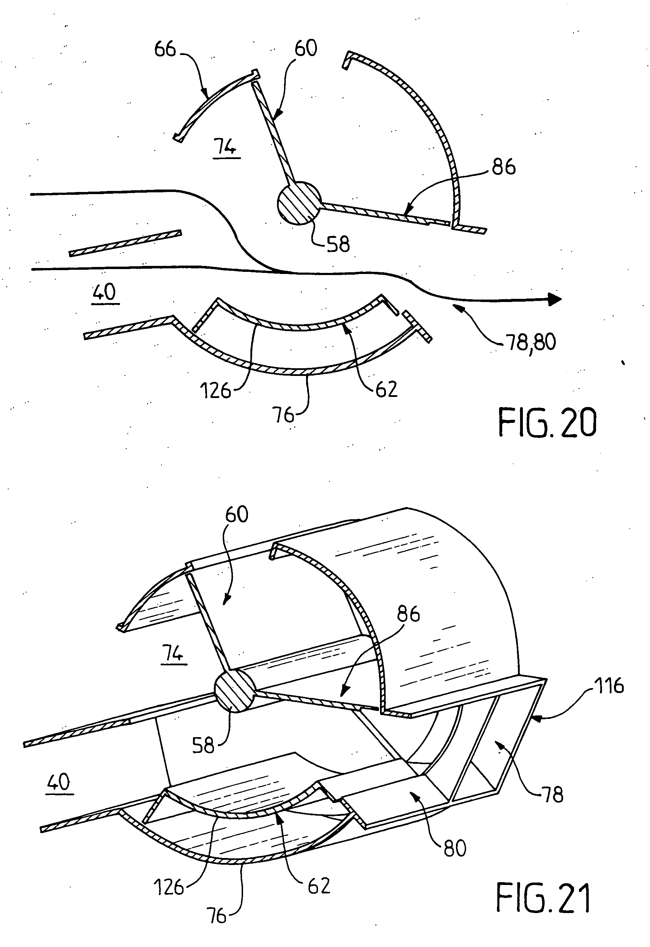

Dans la position "aération" des figures 20 à 23, qui constitue une autre position de distribution arrière, le premier organe de contrôle 60 ferme toujours le passage d'air 74, tandis que le deuxième organe de contrôle 62 ouvre la sortie aération arrière 80. Par contre, dans cette position, les deux cloisons latérales 124 ferment l'accès aux sorties pieds arrière 78.

Bien entendu, l'invention est susceptible de nombreuses variantes de réalisation.

## Revendications

1. Dispositif de chauffage-ventilation et/ou climatisation d'un habitacle de véhicule automobile, comprenant un boîtier (10) comportant une chambre amont (12) qui alimente en air frais un conduit auxiliaire (40) alimentant au moins un premier conduit (52, 54 ; 110) d'alimentation d'une zone arrière (ZAr) de l'habitacle, sous le contrôle de premiers moyens de distribution d'air, une première chambre de mixage (20) alimentant en air traité des seconds conduits (30, 32, 34) d'alimentation d'une zone avant (ZAv) de l'habitacle, et une chambre de chauffage (16) alimentant en air réchauffé la chambre de mixage (20) et le(s) premier(s) conduit(s) (52, 54 ; 110),
**caractérisé en ce qu'**il comprend au moins une deuxième chambre de mixage (50) située à l'intersection du conduit auxiliaire (40), de la chambre de chauffage (16) et du premier conduit (52, 54 ; 110) et un volet de distribution unique (56) ayant un premier organe de contrôle (60) pour distribuer sélectivement une partie de l'air réchauffé provenant de la chambre de chauffage (16) soit vers la première chambre de mixage (20) soit vers la deuxième chambre de mixage (50) pour y produire un flux d'air mixé et un second organe de contrôle (62) agencé pour contrôler la distribution de l'air mixé provenant de la deuxième chambre de mixage (50) à travers le(s) premier(s) conduit(s) (52, 54 ; 110).

2. Dispositif selon la revendication 1, **caractérisé en ce que** le volet de distribution unique (56) comprend un axe de rotation (58) supportant le premier organe de contrôle (60) et le second organe de contrôle (62), et **en ce que** le premier organe de contrôle (60) est agencé pour coopérer avec une première paroi (66 ; 112) qui est située dans la chambre de chauffage (16) délimitant un passage d'air (74) pour ladite partie d'air réchauffé, tandis que le second organe de contrôle (62) est agencé pour coopérer avec une seconde paroi (76) délimitant la deuxième chambre de mixage (50), et dans laquelle débouche au moins une sortie d'air (78, 80 ; 108) alimentant le(s) premier(s) conduit(s) (52, 54 ; 110).

3. Dispositif selon la revendication 2, **caractérisé en ce que** la deuxième paroi (76) comporte une seule sortie d'air (108) qui alimente un seul premier conduit (110), et **en ce que** le volet de distribution (56) est déplaçable entre une première position dans laquelle le premier organe de contrôle (60) ouvre le passage d'air (74), tandis que le deuxième organe de contrôle (62) ferme la sortie d'air (108), et une seconde position de distribution arrière dans laquelle le premier organe de contrôle (60) ferme le passage d'air (74), tandis que le deuxième organe de contrôle (62) ouvre la sortie d'air (108).

4. Dispositif selon la revendication 3, **caractérisé en ce que** le premier organe de contrôle (60) comprend une aile de forme générale rectangulaire qui s'étend à partir de l'axe de rotation (58) et qui est bordée par une arête (64) agencée pour coopérer avec la première paroi (112), tandis que le deuxième organe de contrôle (62) comprend une coque (82) reliée à l'axe de rotation (58) et agencée pour coopérer avec la deuxième paroi (76) qui est de forme cylindrique.

5. Dispositif selon la revendication 4, **caractérisé en ce que** la première paroi (112) se termine par un bord d'extrémité (114) avec lequel coopère l'arête (64) du premier organe de contrôle (60) lorsque le volet de distribution est dans la position de distribution arrière.

6. Dispositif selon la revendication 2, **caractérisé en ce que** la deuxième paroi (76) comporte au moins deux sorties d'air (78, 80) décalées angulairement par rapport à l'axe de rotation (58) qui alimentent deux premiers conduits (52, 54), et **en ce que** le volet de distribution (56) est déplaçable entre une première position de distribution dans laquelle le premier organe de contrôle (60) ouvre le passage d'air (74), tandis que le deuxième organe de contrôle (62) ferme les deux sorties d'air (78, 80) et deux positions de distribution arrière dans laquelle le premier organe de contrôle (60) ferme le passage d'air (74), tandis que le deuxième organe de contrôle (62) ouvre respectivement l'une des deux sorties d'air (78, 80).

7. Dispositif selon la revendication 6, **caractérisé en ce que** les deux sorties d'air comprennent une sortie pieds arrière (78) et une sortie aération arrière (80) qui alimentent respectivement un conduit pieds arrière (52) et un conduit aération arrière (54), et **en ce que** le volet de distribution (56) est déplaçable entre une première position extrême qui correspond à la première position de distribution et une deuxième position extrême qui correspond à une position aération arrière dans laquelle la sortie aération arrière (80) est ouverte, le volet de distribution occupant au moins une position intermédiaire qui correspond à une position pieds arrière dans laquelle la sortie pieds arrière (78) est ouverte.

8. Dispositif selon la revendication 7, **caractérisé en ce que** le premier organe de contrôle (60) comprend une aile de forme générale rectangulaire qui s'étend à partir de l'axe de rotation (58) et qui est bordée par une arête (64) agencée pour coopérer avec la première paroi (66), tandis que le deuxième organe de contrôle (62) comprend une coque (82) reliée à l'axe de rotation (58) et agencée pour coopérer avec la deuxième paroi (76) qui est de forme cylindrique, ainsi qu'une aile radiale (86) agencée pour fermer la sortie pieds arrière (78) lorsque le volet de distribution est dans la position aération arrière.

9. Dispositif selon la revendication 8, **caractérisé en ce que** la première paroi (66) comporte une portion cylindrique circulaire (68) avec laquelle coopère l'arête (64) du premier organe de contrôle (60) lorsque le volet de distribution (56) est dans l'une ou l'autre des positions de distribution arrière.

10. Dispositif selon la revendication 2, **caractérisé en ce que** la deuxième paroi (76) comporte au moins deux sorties d'air (78, 80) décalées axialement sur une même génératrice parallèle à l'axe de rotation (58) qui alimentent deux premiers conduits (52, 54), et **en ce que** le volet de distri bution (56) est déplaçable entre une première position dans laquelle le premier organe de contrôle (60) ouvre le passage d'air (74), tandis que le deuxième organe de contrôle (62) ferme les deux sorties d'air (78, 80) et deux positions de distribution arrière dans lesquelles le premier organe de contrôle (60) ferme le passage d'air (74), tandis que le deuxième organe de contrôle (62) ouvre respectivement l'une au moins des deux sorties d'air (78, 80).

11. Dispositif selon la revendication 10, **caractérisé en ce que** les deux sorties d'air comprennent au moins une sortie pieds arrière (78) et au moins une sortie aération arrière (80) qui alimentent respectivement un conduit pieds arrière (52) et un conduit aération arrière (54), et **en ce que** le volet de distribution (56) est déplaçable entre une première position extrême qui correspond à la première position de distribution et une deuxième position extrême qui correspond à une position aération arrière dans laquelle la sortie aération arrière (80) est ouverte, le volet de distribution occupant au moins une position intermédiaire qui correspond à une position pieds arrière dans laquelle la sortie pieds arrière (78) est ouverte.

12. Dispositif selon la revendication 11, **caractérisé en ce que** le premier organe de contrôle (60) comprend une aile de forme générale rectangulaire qui s'étend à partir de l'axe de rotation (58) et qui est bordée par une arête (64) agencée pour coopérer avec la première paroi (66), tandis que le deuxième organe de contrôle (62) comprend une coque (82) reliée à l'axe de rotation (58) et agencée pour coopérer avec la deuxième paroi (76) qui est de forme cylindrique, la coque comportant des portions (126, 132) aptes à fermer ou ouvrir sélectivement la sortie aération arrière (80) et la sortie pieds arrière (78), ainsi qu'au moins une aile radiale (86, 124) agencée pour fermer la sortie pieds arrière (78) lorsque le volet de distribution est dans la position aération arrière.

13. Dispositif selon la revendication 12, **caractérisé en ce que** la première paroi (66) comporte une portion cylindrique circulaire (68) avec laquelle coopère l'arête (64) du premier organe de contrôle (60) lorsque le volet de distribution (56) se trouve dans l'une ou l'autre des positions de distribution arrière.

14. Dispositif selon l'une des revendication 11 à 13, **caractérisé en ce qu'**il comprend deux sorties pieds arrière (78) qui encadrent une sortie aération arrière (80).

15. Dispositif selon l'une des revendication 11 à 13, **caractérisé en ce qu'**il comprend au moins une sortie pieds arrière (78) et au moins une sortie aération arrière (80) qui sont décalées angulairement et axialement par rapport à l'axe de rotation (58).

16. Dispositif selon l'une des revendication 1 à 15, **caractérisé en ce qu'**il comprend une cloison centrale (96), totale ou partielle, qui s'étend dans la deuxième chambre de mixage (50) pour définir respectivement des flux d'air pour une partie droite et une partie gauche de l'habitacle.

17. Dispositif selon la revendication 16, caractérisé en ce la cloison centrale (96) est totale pour diviser ainsi la deuxième chambre de mixage (50) en deux chambres contenant chacune un volet de distribution (56) pour la gestion en distribution et en température des flux d'air dans la partie droite et la partie gauche de l'habitacle.
